# EUROPEAN PATENT SPECIFICATION

(11) **EP 1 527 335 B1**
(45) Date of publication and mention of the grant of the patent: **04.07.2012**
(21) Application number: 03784764.7
(22) Date of filing: 11.07.2003
(51) Int. Cl.: G01N 27/40, C08F 214/26

(54) **AUTOMOTIVE GAS SENSOR COMPRISING HIGH TEMPERATURE OLEOPHOBIC MATERIALS**
GASSENSOR EINES KRAFTFAHRTWAGENS BESTEHEND AUS HOCHTEMPERATURBESTÄNDIGEN SOWIE OLEOPHOBEN WERKSTOFFEN
CAPTEUR DE GAZ POUR AUTO COMPRENANT DES MATERIAUX OLEOPHOBES A HAUTE TEMPERATURE

(30) Priority: 09.08.2002 US 215654
(43) Date of publication of application: 04.05.2005
(73) Proprietor: Gore Enterprise Holdings, Inc., Newark, DE 19714 (US)
(72) Inventor: AGARWAL, Vivek, Wilmington, 19808 (US); DE GUISEPPI, David, T., Chadsford, PA 19317 (US); DUTTA, Anit, Wilmington, DE 19808 (US)
(74) Representative: Shanks, Andrew
(86) International application number: PCT/US2003/021867
(87) International publication number: WO 2004/015409

(56) References cited:
- EP-A- 0 159 268
- EP-A- 0 754 630
- WO-A-96/22315
- US-A- 4 670 328
- US-A- 5 089 133
- US-A- 5 874 663
- US-B1- 6 196 708
- DATABASE WPI Section Ch, Week 199514 Derwent Publications Ltd., London, GB; Class A14, AN 1995-100979 XP002260647 -& JP 07 023936 A (KOKEN MEDICAL KK), 27 January 1995 (1995-01-27)

## Description

### FIELD OF THE INVENTION

This invention relates to materials that are gas permeable, oleophobic, and resistant to penetration by liquids for use in automotive gas sensors. More particularly, this invention relates to gas permeable materials that are resistant to penetration by liquids, and that are oleophobic at high temperatures.

### BACKGROUND

There is a need for gas permeable materials, that are resistant to penetration by liquids and that are also oleophobic.

WO 96/22315 relates to an aqueous micro emulsion polymerization process for preparing coating composition for use in gas permeable articles, such as gas filter, vent filters, etc. By coating a microporous PTFE substrate with the composition, articles of enhanced oleophobicity and increased thermal stability can be obtained. In preferred embodiments, the composition comprises a copolymer of TFE and perfluoropropyl vinyl ether, PPVE.

US 6,196,708 describes a gas sensor comprising a vent, wherein the vent comprises a porous, expanded PTFE (ePTFE) substrate and an oleophobic enhancement agent, especially a fluoropolymer.

EP0754630 relates to a screw cap that forms a releasable closure for e.g. vessels, packages and bottles containing fluid or solids. The cap includes a pressure equalisation device, with a one or more membranes made of material that is impermeable to fluid and solids. The membranes allow the passage of gas and comprise a liquid anti-surge element of gas permeable material to protect the membrane from the contents. The cap is a plastic pressure injection moulding and the membrane is integrated into it by injection into or onto part of its top cover.

US 4 670 328 relates to an impregnated material comprising an organic or inorganic material selected from the group consisting of a woven fabric, a non-woven fabric and an open cell porous material which is impregnated with a copolymer. The copolymer comprises 50 to 95% by mole of repeating units derived from tetrafluoroethylene and 5 to 50% by mole of repeating units derived from perfluoroalkyl vinyl ether. The copolymer has good chemical, corrosion, solvent and oil resistance as well as water- and oil-repellence.

EP 0 159 268 relates to a fluoroplastic resin dispersion modified by the addition of a fluoroelastomer latex to yield a fluid coating or casting composition. The fluoroplastic resin dispersion, preferably an aqueous dispersion of a perfluoroplastic, such as ploytetrafluoroethylene (PTFE), is modified by blending with a fluoroelastomer composition, preferably a latex, such that the fluoroplastic comprises up to about 95%, preferably up to about 90%, by weight of the invention composition. The fluoroelastomer component comprises at least about 5% by weight of the blend. The fluid compositions according to the invention may preferably comprise from about 10-95% by weight fluoroplastic and from about 5-95% fluoroelastomer.

JP 7023936 relates to improvements to the stable response time and replacement life of a membrane and a spacer of a sensor in monitoring of a heaing power type skin through gas pressure detector. A specific modified fluororesin film is disclosed as a membrane to be installed on a sensor body and for a spacer.

There is also a need for gas permeable, liquid impermeable, oleophobic materials that are capable of maintaining these properties upon long-term, high temperature exposure.

Porous materials are used in various high temperature applications, such as industrial processing and the automotive industry. Some applications require resistance or impermeability to low surface tension fluids for extended use. For example, porous vents are known for various uses in the automotive industry, and allow for gas flow-through while providing protection to sensors by minimizing entry of water. The automotive oxygen sensor, which measures oxygen content in the exhaust gas of an internal combustion engine, allows outside ambient air into the sensor's ceramic electrode assembly. Since liquid water entering the sensor will interfere with the functioning of the sensor, it is crucial that water is kept out of the interior of the sensor.

Exposure of automotive sensors to other environmental contaminants such as low surface tension automotive fluids, which are capable of penetrating a vent made of a porous material can result in sensor failure. Moreover, contaminants such as oil, can block pores of the vent and reduce gas-flow through.

In DE 195 41 218 A1, Bosch teach a membrane made of a gas permeable and liquid impermeable material that covers a vent hole in the body of an electrode assembly. The membrane may be made of porous Teflon®, but Bosch does not describe an oleophobic coating that may provide oil resistance.

In U. S. Patent No. 5,089, 133, which issued to NGK, a water-repelling porous material is taught to protect vent holes of an oxygen sensor from water ingress. The water-repelling porous material may include compacted glass fiber, compressed graphite, and metallic fibers each treated with water repellant, however, specific water repellants are not taught.

Gas filters and vent filters have been made from polymers such as polyolefins or polytetrafluoroethylene. Vents comprised of polytetrafluoroethylene generally have water entry pressure of greater than about 3 psi requiring a material with a porosity of about 20 %-90 % and an airflow of less than about 300 Gurley seconds. However, the oleophobicity of such materials is limited. Liquids with low surface tension such as oil or soap solutions can penetrate porous PTFE membranes over time. A number of treatments such as Scotchguard0 from 3M and Zone) @ products from Dupont are known to make fabrics oil and water-resistant. Additionally, U. S. Patent No. 5.116, 650 teach coating a porous material, preferably PTFE, with a copolymer of perfluoro-2, 2-dimethyl-1, 3-dioxole and tetrafluoroethylene to form a hydrophobic and oleophobic gas permeable material.

Other treatments are known that can be used to make microporous membranes oil resistant such as those described in U. S. Patent Nos. 5,462, 586,5, 116,650, 5,286, 279,5, 376,441, 6,196, 708,5, 156,780, and 4,954, 256. These treatments generally coat the membrane with a low surface energy polymer in a solvent or aqueous dispersion while still keeping the pores open for air flow. These treatments typically degrade upon long-term thermal exposure and thus, are ineffective at maintaining oleophobicity in high temperature applications for a time period suitable for extended long-term use.

Buerger DE 197 30 245 teach an oleophobic treatment for microporous membranes which can be used in applications at temperatures in the range of about 180 C. However, this is considerably lower than the temperature required for some high temperature applications.

Automotive oxygen sensors are located in the exhaust manifold where the temperature of exhaust gas may reach approximately 850 C to greater than about 1000 C. The vent material may reach temperatures of 200 C to 300 C. As the requirement of temperature resistance for automotive oxygen sensors is increasing, there is a need for gas permeable materials which are oleophobic and resistant to penetration by water, and which maintain these properties upon long-term, high temperature exposure. Such materials would be advantageous over the currently available technology.

### SUMMARY OF THE INVENTION

The present invention is directed to an automotive gas sensor, according to claim 1. Preferred embodiments are described in the dependent claims.

### DESCRIPTION OF THE FIGURES

Figure 1 shows a schematic sectional view of an oxygen sensor and a membrane vent according to the invention.
Figure 2 shows an oxygen sensor membrane vent according to the invention.

### DETAILED DESCRIPTION

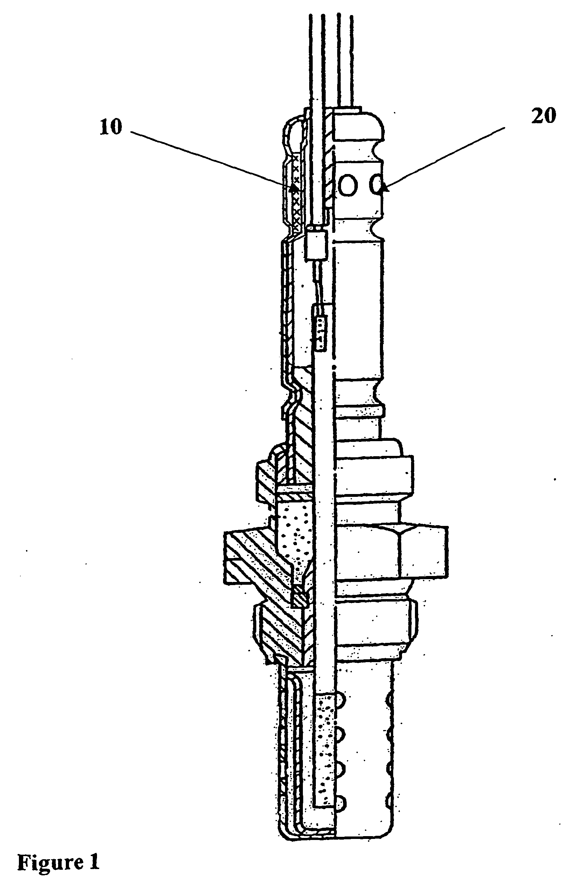

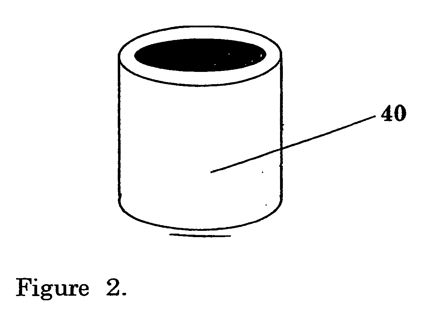

In one embodiment of the present invention, illustrated by Fig. 1, an automotive gas sensor is provided having an automotive gas sensor vent **10** to reduce the exposure of a gas sensor from water and contaminants such as oil and dirt which may enter a sensor by way of vent holes **20.** The vent illustrated in Fig. 2 having an external surface **40** comprises a porous substrate and a coating composition to provide gas permeability and oleophobicity to the automotive gas sensor in high temperature applications.

The gas permeable, oleophobic materials of the present invention comprise a porous substrate and a coating comprising a polymer which at least partially coats the porous substrate. The porous material can be a fabric or film, such as a nonwoven, woven, or knit fabric, or a scrim, that permits the flow of gas, such as air. By "porous" is meant a substrate that allows the passage of gases, especially air, and that comprises pores and voids that form passages extending through the thickness of the material. The passages preferably open on both sides of the substrate and may be interconnected internally. By "gas-permeable material" is meant a porous material that permits the flow of air or other gases through it, in contrast to a non-porous material in which gas permeation is controlled by solution/diffusion mechanisms. Preferred gas permeable materials have a Gurley number of less than about 1000 seconds.

The porous substrate is made of polymer. The substrates can be used singly or multiply, such as in layered or laminated composite articles. Suitable substrates may be in a form such as a sheet, tube or plug. Forms may be prepared by any suitable method such as extruding, cutting, expanding or wrapping the porous material. Selection of appropriate forms and materials will be made according to end use requirements such as filtration requirements, physical, chemical, and mechanical properties required, environmental conditions, costs, manufacturing, etc.

In an exemplary embodiment of the present invention, a vent for automotive gas sensors may be in any form suitable for providing adequate protection to sensors including, but not limited to tube, circular disk, or other porous member. A preferred embodiment comprises a membrane vent for an automotive oxygen sensor according to Fig. 2 having an appropriate shape and measure sufficient to protect the sensor from environmental contaminants while allowing sufficient gas flow-through.

It is desirable that the substrate is hydrophobic and temperature resistant, so porous polytetrafluoroethylene (PTFE) is employed. Preferably, a microporous expanded PTFE (ePTFE) material is made in accordance with U.S. Patent No. 3,953,566, having a structure of interconnected nodes and fibrils. Expanded PTFE suitable for use in the present invention contains micropores or voids extending through the membrane which allows for good gas or air flow while providing resistance to liquid or water penetration. Porous PTFE substrates, preferably having a Gurley number of 1000 or less, have interstices or pores that form passages and pathways suitable for air flow and that comprise internal surfaces extending from one surface of the substrate to another surface of the substrate. One preferred substrate material comprises a laminate of at least one layer of ePTFE and at least one polymer layer.

It was found that preferred porous substrates can be coated with a coating composition comprising a polymer which comprises tetrafluoroethylene (TFE) and perfluormethyl vinyl ether (PMVE), to produce a material which is gas permeable, and which is resistant to both water and oil, and which surprisingly retains these resistant properties at high temperatures for extended periods of time. It has been surprisingly found that materials and articles of the present invention remain flexible and pliable, and do not become brittle after long-term exposure to high temperatures.

Thus the oleophobic material comprises a porous substrate and a coating composition comprising a polymer of TFE and perfluoromethyl vinyl ether (PMVE), wherein the coating composition coats internal surfaces of the porous membrane. The porous substrate comprises a porous ePTFE membrane.

Polymers comprise PMVE and TFE monomers that are present at about 10 and 90 weight percent PMVE and complementally about 90 and 10 weight percent TFE. Preferred polymers comprise between about 30 and 80 weight percent PMVE and complementally between about 70 and 20 weight percent TFE. More preferred are polymers having between about 30 and 70 weight percent PMVE and complementally between about 70 and 30 weight percent TFE.

Polymers or copolymers of TFE and PMVE can be made by any method known in the art, such as by emulsion polymerization.

The coating composition may be prepared as a solution, emulsion or dispersion of TFE/PMVE polymer. In one embodiment, the coating composition may comprise a solution of the polymer and a fluorinated solvent. A dilute solution is preferred to maintain the gas permeable nature of the porous material. Coating compositions may comprise solutions having, for example, from about 0.01% to about 10% by weight of the TFE/PMVE polymer. Preferred coating compositions comprise solutions having from about 0.1% to about 10%, or from about 0.1 to about 2%, or alternately from about 0.1 % to about 1 %, by weight of the TFE/PMVE polymer.

Where the coating composition comprises an emulsion of TFE/PMVE polymer, the emulsion may be obtained directly from the polymerization reaction where the polymerization process was by emulsion polymerization. Coating compositions comprising emulsions have about 0.01% to about 20% by weight of the polymer in an aqueous medium; preferably from about 0.1 % to about 20%, most preferably from about 0.1% to about 4%, or alternately from about 0.1 % to about 2% by weight of the polymer.

The coating composition may comprise additional components, such as crosslinking and/or curing agents. Further, the coating composition may comprise wetting components that enable the coating to easily wet and penetrate the porous material. Wetting agents include but are not limited to surfactants, alcohol such as isopropyl alcohol, or other low surface tension liquids. Alcohol or other low surface tension liquids may also be applied to prewet the porous material prior to application of the coating composition.

Various processes for applying coating compositions are known to those skilled in the art. The coating composition may be applied to the porous substrate by any of these known methods, for example, dipping, spraying or other roll coating processes, and may be applied to one or more external and internal surfaces of the porous substrate. Where the passages and pathways of the porous substrate are coated with polymer, it is preferable that the coating is applied without substantially blocking the pores. By the term "without substantially blocking the pores" it is meant that the gas permeable nature of the material is maintained.

The coated material is dried, for example, in air or by heating to remove the water or solvent, and may be further heat-treated to improve the performance of the coated material. In one embodiment of the present invention it is believed that heating may orient the CF₃ groups of the coating composition toward the surface of the coated material thereby maximizing the oleophobic nature of the coating and imparting oleophobicity to the porous material. The coated material may also be heated to soften the polymer coating, causing the coating to flow over the surface of the porous substrate to achieve coating uniformity while maintaining its gas-permeable characteristic. This is useful for eliminating coating defects such as from an improperly coated area.

Also, a method is provided for protecting an automotive gas sensor (Fig. 1) from environmental contaminants. The method comprises 1) providing an automotive gas sensor for sensing gas in a system, and 2) providing a high temperature oleophobic, gas permeable vent. Automotive gas sensor vents (Fig. 1 at 10, and Fig. 2) made according to the present invention reduce exposure of a sensor to low surface tension fluids such as oil by providing an oleophobic material which resists wetting by and repels oil.

A preferred method comprises 1) providing an automotive gas sensor for sensing gas in a system, 2) providing a vent comprising an oleophobic gas permeable material comprising a porous ePTFE polymer and a coating having a polymer comprising TFE and PMVE, and 3) positioning the vent in relation to the gas sensor to reduce exposure of the gas sensor from the ingress of water and contaminants, such as low surface tension fluids including oil, which may enter an automotive sensor by way of vent holes (Fig. 1 at **20**).

The oleophobicity of a material can be rated as described in the Oil Rating test method described below (according to AATCC test 118-1997), which evaluates a material's resistance to wetting by oil. Failure occurs when wetting of the material, as determined by clarification of the material, occurs within about 30 seconds. The higher the value achieved from the oil rating test, the greater the oleophobicity of the material being tested.

Preferred materials and articles of the present invention are characterized as "oleophobic" or "oil resistant" materials by having oil values of 3 or greater than three (3), and preferably 5 or greater than five (5), and most preferably 6 or greater than six (6).

The oleophobic materials resist degradation and have stable oil ratings upon exposure to elevated temperatures. In accordance with the present invention, oleophobic materials are considered having stable oil ratings where the oil rating achieved after thermal exposure remains unchanged when compared to the initial oil rating prior to heating. Temperature ranges suitable for many automotive uses in or near the engine generally include temperatures greater than about 160°C; however, other automotive uses in or near an engine have increased temperature requirement. Materials of the present invention are oleophobic and have stable oil ratings at temperatures at or greater than about 220 °C, more preferably at or greater than about 250 °C, even more preferred at or greater than about 275 °C. Particularly preferred materials of the present invention are considered "high temperature materials', and are resistant to degradation and are oleophobic, having stable oil ratings at temperatures at or greater than about 300 °C.

Especially upon long term exposure to temperatures greater than about 250 °, and at or greater than about 275 °C, preferred materials resist degradation and have stable oil ratings. For example, high temperature materials of the present invention remain oil resistant after exposure to about 250° and 300 °C for at least 14 days, or longer. When heated to about 250° and 300 °C for about 14 days, preferred high temperature materials have stable oil ratings of 3 or greater, more preferably, 5 or greater, and further preferred, 6 or greater. The most preferred materials can withstand high temperature exposure for 4000 hours or longer and remain oleophobic.

Oleophobic, gas permeable materials of the present invention were compared to uncoated substrates and substrates coated with other coatings. Materials of the present invention are oleophobic and have stable oil ratings upon long-term high temperature exposure. Tables 1, 2, and 3 illustrate properties of materials of the present invention in comparison to other materials.

### TEST PROCEDURES

### Air Permeability

The resistance of samples to air flow was measured using the Gurley densometer manufactured by Gurley Precision Instruments (Troy, New York) in accordance with the procedure described in ASTM Test Method D726-58. The results are reported in terms of Gurley number, or Gurley seconds, which is defined as the time in seconds for 100 cubic centimeters of air to pass through 1 square inch (6.45 cm²) of a test sample at a pressure drop of 4.88 inches of water (12.39 cm). Orifices of different area may be used; for the purposes of the measurements reported here, an orifice having an area of 0.1 square inches was used, and the results are calculated and reported as an equivalent Gurley that would be obtained using a 1 square inch orifice plate. In this test a sample is placed between two clamping plates. Each plate contains an orifice of the reported size to allow air to pass through. A cylinder providing the desired pressure is lowered over the sample. The downward movement of the cylinder is a measure of the airflow rate. Specific markings on the cylinder indicate the amount of air that has passed through the sample. The time for 100 cc of air to pass through the sample sandwiched between the plates having the given orifice is measured.

### Oil Rating

The resistance to wetting with oil or the degree of oleophobicity is measured using an oil rating test (AATCC test method 118-1997). In this test drops of n-alkane are placed on the substrate and viewed for about 30 seconds for wetting as indicated by clarification of the substrate. Fully wet-out areas become translucent to transparent. This indicates that the test fluid has entered sample pores. Samples that retain the original opacity have not wet-out. A higher oil rating number indicates a higher degree of oleophobicity.

### Water Entry Pressure

The water entry pressure (WEP) represents the pressure at which water penetrates the substrate and passes through to the opposite side. The WEP tester was manufactured by W.L Gore & Associates. The test sample is clamped between a pair of testing plates taking care not to damage the sample. The lower plate has the ability to pressurize a section of the sample with water. The top plate has a transparent window vented to the atmosphere allowing the tester to view the sample. A piece of pH paper is placed on top of the sample between the sample and top plate on the non pressurized side of the sample as an indicator of evidence for water entry or breakthrough. The sample is pressurized in small increments with the pressure being increased until a color change in the pH paper indicates the first sign of water breakthrough. The pressure at breakthrough is recorded as the WEP of the material. Color changes in the pH paper, as a result of water vapor is not considered as evidence of water breakthrough. The test results are taken from the center of the sample to avoid erroneous results that may occur from damaged edges.

### EXAMPLES

### Comparative Example 1

Uncoated porous expanded PTFE tubes having a length of about 13 mm, diameter of about 14 mm, a porosity of about 60%, and a wall thickness of 0.8 mm (manufactured by W. L. Gore & Associates, Elkton, MD) were compared to coated porous PTFE materials described in the following examples. Coated and uncoated materials were tested for air permeability (reported in Gurley seconds), water entry pressure (WEP), and resistance to wetting with oil (Oil Rating), the results of which may be found in the tables below.

### Example 2

Porous PTFE tubes were coated with a solution of tetrafluoroethylene /perfluoromethyl vinyl ether (TFE/PMVE) polymer.

A TFE/PMVE polymer having about 60 % by weight PMVE and about 40% by weight TFE was prepared by an emulsion polymerization reaction; the resulting polymer from the emulsion was coagulated and purified. A coating solution was prepared by dissolving approximately 1.0 gram of ground, powdered TFE/PMVE polymer into about 200 grams in FLUORINERT® FC-75 obtained from the 3M Company (St. Paul, MN). The solution was heated to about 80 °C for about two hours to dissolve the polymer.

Expanded PTFE tubes according to Example 1 were cut in 10 mm lengths and dipped into the coating solution for about one minute. The samples were removed and dried in air. The samples were tested and the results were reported in the tables below.

### Example 3

Porous PTFE tubes were coated with a solution of perfluoromethyl vinyl ether / tetrafluoroethylene (TFE/PMVE) polymer.

A 0.25 weight % coating solution was prepared by dissolving ground, powdered TFE/PMVE polymer prepared as described in Example 2, in FLUORINERT® FC-75 obtained from the 3M Company (St. Paul, MN). The solution was heated to about 80 °C for about two hours to dissolve the polymer.

Expanded PTFE tubes according to Example 1 were cut in 10 mm lengths and dipped into the coating solution for about one minute. The samples were removed and dried in air. The samples were tested, the results of which were reported in the tables below.

### Example 4

Porous PTFE tubes were coated with a solution of perfluoromethyl vinyl ether / tetrafluoroethylene (TFE/PMVE) polymer.

A 1.0 weight % coating solution was prepared by dissolving ground, powdered TFE/PMVE polymer prepared as described in Example 2, in FLUORINERT® FC-75 obtained from the 3M Company (St. Paul, MN). The solution was heated to about 80 °C for about two hours to dissolve the polymer.

Expanded PTFE tubes according to Example 1 were cut in 10 mm lengths and dipped into the coating solution for about one minute. The samples were removed and dried in air. The samples were tested, the results of which may be found in the tables below.

### Example 5

Porous PTFE tubes were prewetted and coated with an emulsion of tetrafluoroethylene/perfluoromethyl vinyl ether (TFE/PMVE) polymer.

A coating composition comprising an emulsion containing TFE/PMVE polymer having about 60% by weight of PMVE and about 40% by weight TFE was obtained by the emulsion polymerization reaction of TFE and PMVE. The polymer solids content of the emulsion was about 1.7 weight %.

Expanded PTFE tubes according to Example 1 were cut in 10 mm lengths and dipped into isopropanol for about one hour. The tubes were removed and place in distilled water for about 12 hours to displace the isopropanol from the pores of the tube. The tubes were then placed into 50 milliliters of the coating composition.

The tubes were emersed in the emulsion for about 12 hours. The tubes were removed and air dried, and subsequently dried in a convection oven (model # CSP-400A-C, Blue M Electric, Watertown, WI) at about 125 °C for about one hour.

### Example 6

Porous PTFE tubes were coated with an emulsion of tetrafluoroethylene/ perfluoromethyl vinyl ether (TFE/PMVE) polymer.

A coating composition was prepared comprising about 1.7% weight TFE/PMVE emulsion, the polymer having about 60% by weight of PMVE and about 40% by weight TFE in water. FLUORAD™ FC-4430 surfactant (3M Company, St. Paul, MN) was added to the emulsion in an amount sufficient to obtain a final concentration of about 5% FC 4430.

Expanded PTFE tubes according to Example 1 were cut in 10mm lengths. The expanded PTFE tubes were dipped into the emulsion for about 12 hours. The tubes were removed and dried in a convection oven (model # CSP-400A-C, Blue M Electric, Watertown, WI) for about 3 hours at about 150 °C.

### Comparative Example 7

Porous PTFE tubes were coated with a solution of fluoroacrylate and perfluorobutenyl vinyl ether.

A 0.5% solution of approximately 40% fluoroacrylate and 60% of a polymer of perfluorobutenyl vinyl ether was made with FLUORINERT® FC-75 (3M Company, St. Paul, MN) substantially according to US Patent No. 5,462,586. The solution was heated at about 80 °C for about one hour to dissolve the polymer in solution. Porous PTFE tubes according to Example 1 were dipped into the solution for about one minute and dried in air. The samples were tested and the results were reported in the tables below.

### Comparative Example 8

Porous PTFE tubes were coated with a solution of poly (silsesquioxane).

A coating solution of poly (silsesquioxane) was prepared according to German Patent DE 19730245. Expanded PTFE tubes according to Example 1 were dipped for about one minute in the coating solution and allowed to air dry.

### Table 1

Samples made substantially according to the Examples above were tested for air permeability, water entry pressure and resistance to wetting with oil, the results of which are found in Table 1. The samples were cut along the axial direction, then opened and laid flat to fit into the testing fixtures.

**Table 1**

| | Gurley (seconds) | WEP kPa (psi) | Oil Rating |
|---|---|---|---|
| Comparative Example 1 | 56 | 110 (16) | 1 |
| Example 2 | 22 | 62 (11) | 5 |
| Example 3 | 47 | 83 (12) | 5 |
| Example 4 | 32 | 90 (13) | 6 |
| Example 5 | 45 | 90 (13) | 3 |
| Example 6 | 16 | 62 (9) | 5 |
| Comparative Example 7 | 47 | 90 (13) | 8 |
| Comparative Example 8 | 24 | 103 (15) | 8 |

### Table 2

Samples prepared substantially according to the Examples above were tested for resistance to wetting with oil after long-term exposure to elevated temperature. The samples were placed in an oven and held at about 250 °C for 7 days and 14 days. The samples were removed from the oven, cooled to ambient temperature, and tested for resistance to wetting with oil. The results are found in Table 2.

**Table 2**

| Oil Rating after heat exposure at 250 °C | | | |
|---|---|---|---|
| | | Oil Rating | |
| | Initial | 7 days | 14 days |
| Comparative Example 1 | 1 | 1 | 1 |
| Example 2 | 5 | 6 | 6 |
| Example 3 | 5 | 6 | 6 |
| Example 4 | 6 | 6 | 6 |
| Comparative Example 7 | 8 | 4 | 2 |
| Comparative Example 8 | 8 | 3 | 2 |

### Table 3

Samples prepared substantially according to the Examples above were tested for resistance to wetting with oil after long-term exposure to elevated temperature. The samples were placed in an oven and held at about 300 °C for 7 days and 14 days. The samples were removed from the oven, cooled to ambient temperature, and tested for resistance to wetting with oil. The results are found in Table 3.

**Table 3**

| Oil Rating after heat exposure at 300 °C | | | |
|---|---|---|---|
| | | Oil Rating | |
| | Initial | 7 days | 14 days |
| Comparative Example 1 | 1 | 1 | 1 |
| Example 2 | 5 | 5 | 5 |
| Example 3 | 5 | 5 | 5 |
| Example 4 | 6 | 6 | 6 |
| Comparative Example 7 | 8 | 2 | 3 |
| Comparative Example 8 | 8 | 1 | 1 |

## Claims

1. An automotive gas sensor comprising
a vent for reducing exposure of the sensor to low surface tension fluids, wherein the vent comprises an oleophobic gas permeable material comprising:
a porous expanded polytetrafluoroethylene (ePTFE) substrate and a coating composition that coats the Internal surfaces of the porous substrate comprising a copolymer of tetrafluoroethylene and a perfluoromethyl vinyl ether;
the oleophobic gas permeable material having a stable oil rating of 5 or greater when heated to 250°C for 14 days.

2. The sensor of claim 1, wherein the copolymer contains between 10 and 90 weight percent perfluoromethyl vinyl ether and complementally 90 and 10 weight percent tetrafluoroethylene.

3. The sensor of claims 1 or 2, wherein the copolymer contains between 30 and 80 weight percent perfluoromethyl vinyl ether and complementally 70 and 20 weight percent tetrafluoroethylene.

4. The article of any preceding claim, wherein the automotive gas sensor vent is an oxygen sensor vent.

## Patentansprüche

1. Kraftfahrzeug-Gassensor, der aufweist:
eine Entlüftung, um die Einwirkung von Fluiden mit niedriger Oberflächenspannung auf den Sensor zu vermindern, wobei die Entlüftung ein oleophobes gasdurchlässiges Material umfasst, das aufweist:
ein Substrat aus porösem expandiertem Polytetrafluorethylen (ePTFE) und eine Beschichtungszusammensetzung, die eine Innenfläche des porösen Substrats überzieht und ein Copolymer aus Tetrafluorethylen und einem Perfluormethylvinylether aufweist;
wobei das oleophobe gasdurchlässige Material, wenn es 14 Tage auf 250°C erhitzt wird, eine stabile Öleinstufung von 5 oder mehr aufweist.

2. Sensor nach Anspruch 1, wobei das Copolymer zwischen 10 und 90 Gew.-% Perfluormethylvinylether und komplementär dazu zwischen 90 und 10 Gew.-% Tetrafluorethylen aufweist.

3. Sensor nach Anspruch 1 oder 2, wobei das Copolymer zwischen 30 und 80 Gew.-% Perfluormethylvinylether und komplementär dazu zwischen 70 und 20 Gew.-% Tetrafluorethylen aufweist.

4. Artikel nach einem der vorstehenden Ansprüche, wobei die Kraftfahrzeug-Gassensorentlüftung eine Sauerstoffsensorentlüftung ist.

## Revendications

1. Capteur de gaz pour automobile comprenant:
un évent pour réduire l'exposition du capteur à des fluides à faible tension de surface, dans lequel l'évent comprend un matériau oléophobe perméable aux gaz comprenant:
un substrat de polytétrafluoroéthylène expansé (ePTFE) poreux et une composition de revêtement qui recouvre les surfaces internes du substrat poreux comprenant un copolymère de tétrafluoroéthylène et d'un perfluorométhylvinyléther;
le matériau oléophobe perméable aux gaz possédant une notation d'huile stable de 5 ou plus lorsqu'il est chauffé à 250°C pendant 14 jours.

2. Capteur selon la revendication 1, dans lequel le copolymère contient entre 10 et 90 pour cent en poids de perfluorométhylvinyléther et en complément entre 90 et 10 pour cent en poids de tétrafluoroéthylène.

3. Capteur selon la revendication 1 ou 2, dans lequel le copolymère contient entre 30 et 80 pour-cent en poids de perfluorométhylvinyléther et en complément entre 70 et 20 pour cent en poids de tétrafluoroéthylène.

4. Article selon l'une quelconque des revendications précédentes, dans lequel l'évent du capteur de gaz pour automobile est un évent de capteur d'oxygène.
